# EUROPÄISCHE PATENTSCHRIFT

(11) **EP 2 973 398 B1**
(45) Veröffentlichungstag und Bekanntmachung des Hinweises auf die Patenterteilung: **15.08.2018**
(21) Anmeldenummer: 14714578.3
(22) Anmeldetag: 14.02.2014
(51) Int. Cl.: G06T 7/12, G06T 7/143, G06T 7/194

(54) **VERFAHREN ZUM DETEKTIEREN EINER UNTERWASSERSTRUKTUR SOWIE RECHNER UND WASSERFAHRZEUG**
METHOD FOR DETECTING AN UNDERWATER STRUCTURE, COMPUTER AND WATER VEHICLE
PROCÉDÉ DE DÉTECTION D'UNE STRUCTURE IMMERGÉE AINSI QUE CALCULATEUR ET VÉHICULE NAUTIQUE

(30) Priorität: 14.03.2013 DE 102013102650
(43) Veröffentlichungstag der Anmeldung: 20.01.2016
(73) Patentinhaber: ATLAS ELEKTRONIK GmbH, 28309 Bremen (DE)
(72) Erfinder: KRAUS, Dieter, 28876 Oyten (DE); LEHMANN, Benjamin, 28359 Bremen (DE)
(74) Vertreter: thyssenkrupp Intellectual Property GmbH
(86) Internationale Anmeldenummer: PCT/DE2014/100059
(87) Internationale Veröffentlichungsnummer: WO 2014/139514

(56) Entgegenhaltungen:
- WEI LIU ET AL: "An automatic ellipse and line targets detection method from synthetic aperture sonar images", PROCEEDINGS OF SPIE, Bd. 7495, 30. Oktober 2009 (2009-10-30), Seiten 74953B-74953B-8, XP055118787, ISSN: 0277-786X, DOI: 10.1117/12.832935
- ANTONI BURGUERA ET AL: "On the use of likelihood fields to perform sonar scan matching localization", AUTONOMOUS ROBOTS, KLUWER ACADEMIC PUBLISHERS, BO, Bd. 26, Nr. 4, 29. Januar 2009 (2009-01-29), Seiten 203-222, XP019670016, ISSN: 1573-7527
- MURINO V ET AL: "Object pose estimation in underwater acoustic images", PROCEEDINGS / INTERNATIONAL CONFERENCE ON IMAGE PROCESSING : OCTOBER 26 - 29, 1997, SANTA BARBARA, CALIFORNIA, IEEE COMPUT. SOC, LOSALAMITOS, CALIF. [U.A.], Bd. 1, 26. Oktober 1997 (1997-10-26), Seiten 873-876, XP010254285, DOI: 10.1109/ICIP.1997.648105 ISBN: 978-0-8186-8183-7
- TAO L ET AL: "3D acoustic image segmentation by a RANSAC-based approach", OCEANS 2003. MTS/IEEE PROCEEDINGS. CELEBRATING THE PAST, TEAMING TOWARD THE FUTURE. SAN DIEGO, CA, SEPT. 22 - 26, 2003; [OCEANS MTS/IEEE CONFERENCE PROCEEDINGS], COLUMBIA, MD : MARINE TECHN. SOC, US, 22. September 2003 (2003-09-22), Seite 1098, XP031871373, DOI: 10.1109/OCEANS.2003.178495 ISBN: 978-0-933957-30-5
- Y R PETILLOT ET AL: "Real Time AUV Pipeline Detection and Tracking Using Side Scan Sonar and Multi-Beam Echosounder", OCEANS '02 MTS, Bd. 1, 29. Oktober 2002 (2002-10-29), Seiten 217-222, XP055118811, DOI: 10.1109/OCEANS.2002.1193275 ISBN: 0780375343 in der Anmeldung erwähnt
- Anonymous: "RANSAC-Algorithmus", Wikipedia , 12. März 2012 (2012-03-12), Seiten 1-8, XP55118951, Gefunden im Internet: URL:http://de.wikipedia.org/w/index.php?ti tle=RANSAC-Algorithmus&oldid=115296113 [gefunden am 2014-05-20]

## Beschreibung

Die Erfindung betrifft ein Verfahren zum Detektieren einer Unterwasserstruktur aus einem Sonarbild mit Sonarbildpixeln, einen Rechner, welcher das Verfahren durchführt und ein Wasserfahrzeug, welches den Rechner aufweist.

Das automatisierte Finden von Objektstrukturen in Sonarbildern ist aufgrund der Natur der Bildgebung sehr anspruchsvoll, da in der Regel starkes Rauschen den Nutzsignalen überlagert ist. Des Weiteren kann häufig auf eine große Datenbasis nicht zurückgegriffen werden, welche für trainingsbasierte Lösungsansätze zwingend wäre. Deshalb ist es vorteilhaft parametrisierte Modelle anzunehmen, welche keine Trainingsdaten benötigen. Zum Lösen solcher Aufgaben werden insbesondere Techniken der digitalen Bildverarbeitung eingesetzt.

Es existieren Verfahren und Ansätze zur Detektion von Linienstrukturen, welche beispielsweise auf Gradientenbildung beruhen und nicht immer optimale Ergebnisse liefern (siehe hierzu: Real Time AUV Pipeline Detection and Tracking Using Side Scan Sonar and Multi-Beam Echosounder, Petillot et al., IEEE OCEANS Conference, 2002; Bayesian Tracking of Linear Structures in Aerial Images, Gao und Bischof, 2009 Canadian Conference on Computer and Robot Vision). Ein weiteres Verfahren wird offenbart in Wei Liu et al: "An automatic ellipse and line targets detection method from synthetic aperture sonar images", Proceedings of SPIE, Bd. 7495, 30. Oktober 2009 (2009-10-30), Seiten 74953B-74953B-8.

Aufgabe der Erfindung ist es den Stand der Technik zu verbessern. Zudem soll insbesondere ein Verfahren bereitgestellt werden, welches Sonarbilder auf natürliche oder technische Strukturen untersucht und diese erkennt.

Gelöst wird die Aufgabe durch ein Verfahren zum Detektieren einer Unterwasserstruktur aus einem Sonarbild mit Sonarbildpixeln, wobei das Verfahren folgende Schritte aufweist:
a) Zuordnen der einzelnen Sonarbildpixel zu einem Hintergrundbild oder einem Auswertebild, wobei das Auswertebild zugeordnete Auswertepixel aufweist,
b) Auswählen von einzelnen Auswertepixeln, sodass Stützstellenpunkte vorliegen,
c) Anpassen einer mathematischen Fitfunktion an die Stützstellenpunkte, wobei die Fitfunktion aufgrund der Stützstellenpunkte eine Fitfunktionslänge aufweist,
d) Ermitteln eines Fitfunktionsbands mit einer Fitfunktionsbandbreite, wobei ein Breitenwert der Fitfunktionsbandbreite kürzer als ein Längenwert der Fitfunktionslänge ist,
e) Ermitteln einer Anzahl an Auswertepixeln, welche innerhalb des Fitfunktionsbandes liegen und
f) Durchführen einer Auswertung aufgrund der ermittelten Anzahl an Auswertepixeln.

Somit kann ein alternatives Verfahren zum automatisierten Detektieren einer Unterwasserstruktur bereitgestellt werden. Insbesondere ist der Rechenaufwand vermindert, da wesentliche Informationen durch ein "Zählen" gewonnen werden. Aufwändiges mathematisches Anpassen (Anfitten) an Punktwolken, wie bei üblichen Regressionen, kann entfallen und wird durch ein schnelles Anfitten an wenige Punkte und einem Zählen ersetzt. Insbesondere kann somit Echtzeitfähigkeit erlangt werden, sodass zwischen zwei durch ein Sonar gewonnenen Sonarbildern die relevante Information ermittelt werden kann.

Unter "Detektieren" wird vorliegend insbesondere eine Annahme bzgl. einer Lageposition der Unterwasserstruktur verstanden. Durch ein erneutes Durchführen des Verfahrens für neu gewonnene Sonarbilder kann sich die "angenommene" Lage der Unterwasserstruktur durchaus ändern.

Eine "Unterwasserstruktur" im vorliegenden Sinne umfasst sämtliche natürlichen und technischen Strukturen. Insbesondere sind Pipelines für Gas oder Öl, Kabel, Sprengkörper und Gesteinsformationen umfasst.

Mittels eines Sonars (z.B. Bug-Sonar oder Side-Scan-Sonar) wird ein "Sonarbild" gewonnen. Dieses Sonarbild wird insbesondere mittels Elektronik oder mittels eines Rechners digital aufbereitet, sodass "Sonarbildpixel" das Sonarbild bilden. Ein solches digitales Sonarbild kann beispielsweise mittels eines Monitors dargestellt werden. Insbesondere kann jedes Sonarbildpixel mittels einer Zeilen- und einer Spaltennummer adressiert werden.

Das "Zuordnen der einzelnen Sonarbildpixel zu einem Hintergrundbild oder einem Auswertebild" separiert sämtliche Sonarbildpixel. Das Zuordnungskriterium kann beispielsweise mittels eines Schwellwerts oder des eingangs beschriebenen Gradientenverfahren bestimmt sein. Beim Schwellwert werden beispielsweise sämtliche Sonarbildpixel, welche über einem Wert (Schwellwert) liegen, dem Auswertebild zugeordnet. Analog wird bei dem Gradientenverfahren vorgegangen, wobei sich das Selektionskriterium anhand eines Gradientenwertes ergibt. Es sei darauf hingewiesen, dass aufgrund mathematischer Verfahren sich der Adresswert des selektierten Sonarbildpixels vom Sonarbild zu Auswertebild verändert. Auswertebild und Hintergrundbild können zueinander invers sein, sodass das weitere Verfahren auch mittels des Hintergrundbildes erfolgt, sodass praktisch das Hintergrundbild zum Auswertebild wird.

Die dem Auswertebild zugeordneten Pixel werden vorliegend als Auswertepixel bezeichnet. Diese Auswertepixel werden für das weitere Verfahren verwendet.

Das "Auswählen von einzelnen Auswertepixel" dient insbesondere der Reduktion einer Rechenleistung, da nicht über alle Auswertepixel eine Regressionsberechnung erfolgen muss. Die ausgewählten Auswertepixel dienen dem Weiterverarbeiten und werden als "Stützstellenpunkte" bezeichnet.

Das mathematische "Anpassen einer mathematischen Fitfunktion an die Stützstellenpunkte" liefert eine mathematische Beschreibung eines bestimmten Funktionsverlaufes, wobei die Beschreibung auf Basis der Stützstellenpunkte erfolgt. Für den einfachen Fall einer Geraden reichen zwei zueinander beabstandete Stützstellen aus, welche durch einen affinen, insbesondere linearen, Funktionsverlauf mit der mathematischen Funktion der Form y=mx+b beschreibbar sind. Bei drei Stützstellenpunkten kann analog eine Funktion 2. Grades der Form y=ax²+bx+c verwendet werden. Jedoch kann auch die Auswahl der Stützstellenpunkte eine Punktwolke mit mehr als zwei Stützstellenpunkten umfassen, wobei diese beispielsweise mit der Methode der kleinsten Quadrate (Regression) angepasst (angefittet) werden.

Die "Fitfunktionslänge" entspricht insbesondere einem Wegintegral innerhalb eines Funktionsintervalls, welches beispielsweise vorgegeben ist. Im Falle einer affinen (linearen) Funktion ist es die Länge der sich ergebenen Funktion im Funktionsintervall.

Durch das "Ermitteln eines Fitfunktionsbands mit der Fitfunktionslänge und einer Fitfunktionsbandbreite" kann ein Bereich bereitgestellt werden, indem, bei einer Fitfunktionsbandbreite > 0, die im Bereich verorteten Auswertepixel insbesondere durch Zählen bestimmbar sind.

Dass der "Breitenwert der Fitfunktionsbandbreite kürzer als ein Längenwert der Fitfunktionslänge" ist, ist eine wichtige Voraussetzung, da dadurch das Fitfunktionsband charakterisiert ist.

Das "Ermitteln einer Anzahl an Auswertepixel" erfolgt insbesondere durch ein Zählen und somit dem Bestimmen der Anzahl der Auswertepixel im Fitfunktionsband. Dabei werden insbesondere auch Stützstellenpunkte, die im Fitfunktionsband verortet sind, als Auswertepixel mitgezählt.

Durch die "Auswertung" erfolgt ein Bewerten der gezählten Auswertepixel. Insbesondere kann ein Verhältnis von gezählten Auswertepixeln zu sämtlichen Auswertepixeln gebildet werden. Sobald die Anzahl einen Grenzwert wie beispielsweise 67% überschreitet, wird beispielsweise angenommen, dass der Fitfunktionsverlauf dem Verlauf der Unterwasserstruktur entspricht.

In einer weiteren Ausführungsform werden die Schritte b) bis e) für weitere Auswertepixel durchgeführt, wobei insbesondere die Fitfunktionsbandbreite für alle Fitfunktionsbänder identisch ist, sodass nach dem Ermitteln der jeweiligen Anzahl an Auswertepixel für unterschiedliche Fitfunktionen jeweils die Anzahl der Auswertepixel vorliegt.

Somit liegen insbesondere mehrere Fitfunktionsverläufe, wie beispielsweise Geraden mit unterschiedlichen Steigungen, vor, welche entsprechend auswertbar sind. So können Achsenabschnitte und/oder Steigungen der Geraden gemittelt oder anderweitig ausgewertet werden.

In einer diesbezüglichen Ausführungsform kann beim Auswerten die Fitfunktion zum Fitfunktionsband mit der größten Anzahl an Auswertepixel eine Lage der Unterwasserstruktur beschreiben.

Um ein besonders effektives und schnelles Verfahren bereitstellen zu können, kann ein Funktionsverlauf der Fitfunktionen mit den Fitfunktionsbändern mit der größten oder mit gleicher Anzahl an Auswertepixel gemittelt werden. Beispielsweise kann beim Vorliegen mehrerer Fitfunktionen mit gleicher (maximaler) Anzahl an gezählten Auswertepixel eine Bewertung und somit ein Detektionsverfahrensergebnis bereitgestellt werden. Auch können beispielsweise die Fitfunktionen mit den 10% höchsten gezählten Auswertepixel gemittelt werden, um das Detektionsergebnis zu verbessern.

In einer weiteren Ausführungsform erfolgt das Zuordnen aufgrund einer Schwellwertüberschreitung eines Sonarbildpixels oder einer Gradientenfunktion wenigstens zweier Sonarbildpixel. Somit können Alternativen beim Zuordnen von Sonarbildpixeln zu Auswertebilder bereitgestellt werden. Für das Gradientenverfahren sei insbesondere auf folgende Artikel verwiesen: Real Time AUV Pipeline Detection and Tracking Using Side Scan Sonar and Multi-Beam Echosounder, Petillot et al., IEEE OCEANS Conference, 2002 ; Bayesian Tracking of Linear Structures in Aerial Images, Gao und Bischof, 2009 Canadian Conference on Computer and Robot Vision*.*

Um effektive Fitfunktionsbänder bereitstellen zu können, kann das Auswählen der Auswertepixel so erfolgen, dass ein Mindestabstandswert zwischen zwei Auswertepixeln oberhalb des Breitenwerts der Fitfunktionsbandbreite liegt.

In einer weiteren Ausführungsform erfolgt das Auswählen der Auswertepixel (statistisch) (pseudo)zufällig. Pseudozufällig ist es insbesondere deshalb, da Rechner meist keine echten Zufallszahlen erzeugen können, sondern lediglich Pseudozufallszahlen. So kann bereits durch die Auswahl ein integratives Element bereitgestellt werden, da besonders ineffektive Fitfunktionen schnell ausschließbar sind.

Um das Detektionsergebnis zu verbessern, wird ein Funktionsverlauf der Fitfunktion einem angenommenen Verlauf der Unterwasserstruktur oder eine Fitfunktionsbandbreite der Unterwasserstruktur angepasst. So können reale Verläufe der Unterwasserstrukturen durch das Verfahren antizipiert werden. Beispielsweise kann bei einem Unterwassergefährt aufgrund der Höhe über dem Boden eine Dicke und/oder ein Verlauf der Unterwasserstruktur abgeschätzt werden.

In einer weiteren Ausgestaltungsform wird die Fitfunktion separiert. So können funktional-mathematisch nicht beschreibbare Unterwasserstrukturen durch Unterteilen mathematisch als Funktion beschrieben werden. Auch können etwaige Krümmungen der Unterwasserstruktur durch aneinander anfügbare lineare Verläufe approximiert werden.

Um besonders effektiv die Rechenleistung herabzusetzen, kann beim Anpassen der Fitfunktion eine Regression erfolgen oder so viele Auswertepixel ausgewählt werden, dass eine minimale Anzahl Auswertepixel vorliegt, um mit der Fitfunktion exakt beschreibbar zu sein.

In einer Ausführungsform kann zu Beginn des Verfahrens ein Sonarbild ermittelt werden. Somit kann das Verfahren automatisiert auf einem unbemannten Unterwasserfahrzeug durchgeführt werden, wobei das Unterwasserfahrzeug ein Sonar aufweist, welches die Ausgangsbilder für das Verfahren bereitstellt.

In einer Ausgestaltung der Erfindung wird die Aufgabe gelöst durch einen Rechner, welcher derart eingerichtet ist, dass ein zuvor beschriebenes Verfahren durchführbar ist. Vorliegender Rechner kann insbesondere einen FPGA und/oder ein Steuergerät umfassen.

In einer weiteren Ausgestaltung der Erfindung wird die Aufgabe gelöst durch ein Wasserfahrzeug, insbesondere unbemanntes Unterwasserfahrzeug, welches einen zuvor beschriebenen Rechner aufweist. Somit kann autonom eine Unterwasserstruktur von dem Unterwasserfahrzeug Detektiert werden.

In einer diesbezüglichen Ausgestaltung ist das Wasserfahrzeug derart eingerichtet, dass ein Sonarbild ermittelbar ist. Somit umfasst das Wasserfahrzeug ein Sonar oder mehrere Sonaranlagen, inklusive etwaiger Auswerte- und Verarbeitungseinheiten.

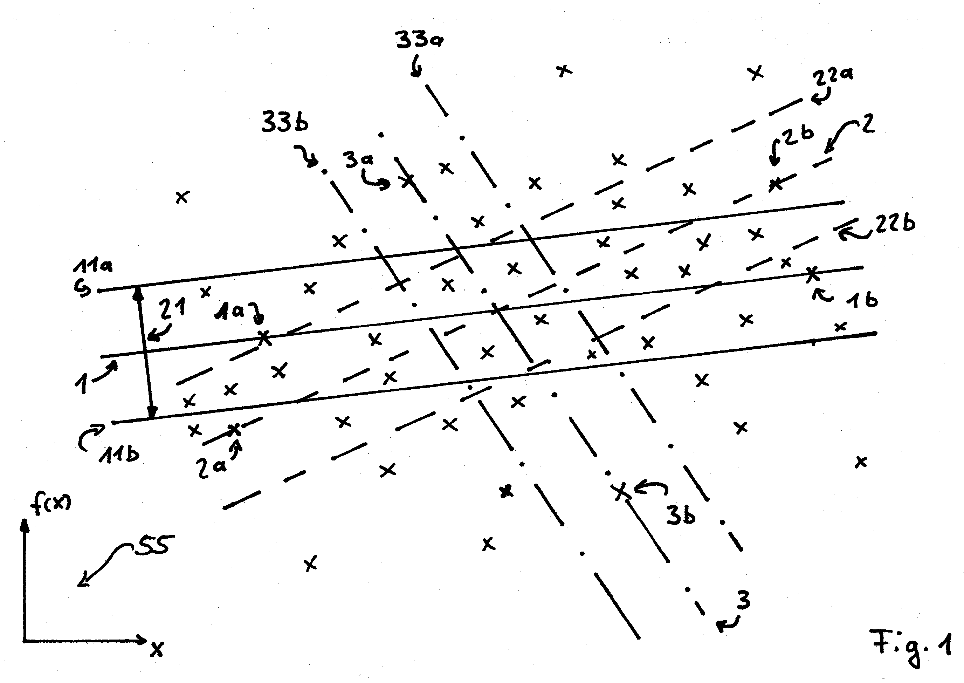

Im Weiteren wird die Erfindung anhand eines Ausführungsbeispiels näher erläutert. Es zeigt die
- Figur 1: eine schematische Darstellung eines Auswertebildes mit angefitteten Stützstellenpunkten und zugehörigen Fitfunktionsbändern.

Ein Sonarbild wurde in ein Hintergrundbild und ein Auswertebild (Fig. 1) separiert. Dabei wurde jedes Sonarbildpixel mit einem vorgegebenen Schwellwert verglichen. Wenn ein einzelnes Sonarbildpixel einen Intensitätswert oberhalb des Schwellwertes aufwies, wurde das Sonarbildpixel als ein Auswertepixel (in der Figur 1 als x dargestellt) des Auswertebilds (Fig. 1) aufgenommen.

Sämtliche Auswertepixel bilden eine Pixelwolke. Aus dieser Pixelwolke werden willkürlich zwei Auswertepixel als Stützstellenpixel 1a, 1b ausgewählt. Der Abstand der beiden Stützstellenpixel 1a, 1b wird bestimmt. Liegt der Wert dieses Abstandes oberhalb einer vorgegebenen Fitfunktionsbreite 21, wird die affine (lineare) Funktion 1 (durchgezogene Linie) mit f(x)=a*x+b zu den Stützstellenpixeln eindeutig bestimmt. Das Koordinatensystem 55 zum Funktionenraum ist ebenfalls angegeben.

Orthogonal zur Funktion 1 wird der Fitfunktionsbreitenabstand 21 ermittelt. Parallel verschobene Grenzen 11a, 11b bilden symmetrisch um die Funktion 1 ein Fitfunktionsband. Anschließend werden die in dem Fitfunktionsband liegenden Auswertepixel gezählt. Vorliegend sind in dem ersten Fitfunktionsband 23 Auswertepixel verortet.

Analog wird zur Funktion 2 (mit Stützstellenpunkte 2a, 2b) und 3 (mit Stützstellenpunkte 3a, 3b) verfahren, wobei die Funktion 2 (gestrichelt dargestellt) die Fitfunktionsbandgrenzen 22a, 22b und die Funktion 3 (gestrichpunktet dargestellt) die Fitfunktionsbandgrenzen 33a, 33b aufweisen. Es sei angemerkt, dass die Fitfunktionsbreiten 21 für alle Fitfunktionen 1, 2, 3 identisch angenommen wurden. In dem Fitfunktionsband zur Funktion 2 sind vorliegend 20 Auswertepixel und in dem Fitfunktionsband zur Funktion 3 sind vorliegend 10 Auswertepixel verortet.

Aufgrund dessen, dass das Fitfunktionsband zur Funktion 1 die meisten Auswertepixel aufweist, wird vorliegend davon ausgegangen, dass der Verlauf der Fitfunktion 1 dem Verlauf einer Pipeline entspricht.

## Patentansprüche

1. Verfahren zum Detektieren einer Unterwasserstruktur aus einem Sonarbild mit Sonarbildpixeln, wobei das Verfahren folgende Schritte aufweist:
a) Zuordnen der einzelnen Sonarbildpixel zu einem Hintergrundbild oder einem Auswertebild, wobei das Auswertebild zugeordnete Auswertepixel aufweist,
b) Auswählen von einzelnen Auswertepixeln, sodass Stützstellenpunkte (1a, 1b) vorliegen,
c) Anpassen einer mathematischen Fitfunktion an die Stützstellenpunkte (1a, 1b), wobei die Fitfunktion aufgrund der Stützstellenpunkte (1a, 1b) eine Fitfunktionslänge aufweist,
d) Ermitteln eines Fitfunktionsbands mit einer Fitfunktionsbandbreite (21), wobei ein Breitenwert der Fitfunktionsbandbreite kürzer als ein Längenwert der Fitfunktionslänge ist,
e) Ermitteln einer Anzahl an Auswertepixeln, welche innerhalb des Fitfunktionsbandes liegen und
f) Durchführen einer Auswertung aufgrund der ermittelten Anzahl an Auswertepixeln.

2. Verfahren nach Anspruch 1, **dadurch gekennzeichnet, dass** die Schritte b) bis e) für weitere Auswertepixel durchgeführt werden, wobei insbesondere die Fitfunktionsbandbreite (21) für alle Fitfunktionsbänder identisch ist, sodass nach dem Ermitteln der jeweiligen Anzahl an Auswertepixeln für unterschiedliche Fitfunktionen jeweils die Anzahl der Auswertepixel vorliegt.

3. Verfahren nach Anspruch 2, **dadurch gekennzeichnet, dass** beim Auswerten die Fitfunktion zum Fitfunktionsband mit der größten Anzahl an Auswertepixeln eine Lage der Unterwasserstruktur beschreibt.

4. Verfahren nach Anspruch 2, **dadurch gekennzeichnet, dass** ein Funktionsverlauf der Fitfunktionen mit den Fitfunktionsbändern mit der größten oder mit gleicher Anzahl an Auswertepixeln gemittelt wird.

5. Verfahren nach einem der vorherigen Ansprüche, **dadurch gekennzeichnet, dass** das Zuordnen aufgrund einer Schwellwertüberschreitung eines Sonarbildpixels oder einer Gradientenfunktion wenigstens zweier Sonarbildpixel erfolgt.

6. Verfahren nach einem der vorherigen Ansprüche, **dadurch gekennzeichnet, dass** das Auswählen der Auswertepixel so erfolgt, dass ein Mindestabstandswert zwischen zwei Auswertepixeln oberhalb des Breitenwerts der Fitfunktionsbandbreite liegt.

7. Verfahren nach einem der vorherigen Ansprüche, **dadurch gekennzeichnet, dass** das Auswählen der Auswertepixel zufällig erfolgt.

8. Verfahren nach einem der vorherigen Ansprüche, **dadurch gekennzeichnet, dass** ein Funktionsverlauf der Fitfunktion einem angenommenen Verlauf der Unterwasserstruktur oder eine Fitfunktionsbandbreite der Unterwasserstruktur angepasst wird.

9. Verfahren nach einem der vorherigen Ansprüche, **dadurch gekennzeichnet, dass** die Fitfunktion separiert ist.

10. Verfahren nach einem der vorherigen Ansprüche, **dadurch gekennzeichnet, dass** beim Anpassen der Fitfunktion eine Regression erfolgt oder so viele Auswertepixel ausgewählt werden, dass eine minimale Anzahl Auswertepixel vorliegt, um mit der Fitfunktion exakt beschreibbar zu sein.

11. Verfahren nach einem der vorherigen Ansprüche, **dadurch gekennzeichnet, dass** zu Beginn des Verfahrens ein Sonarbild ermittelt wird.

12. Rechner, welcher derart eingerichtet ist, dass ein Verfahren nach einem der Ansprüche 1 bis 10 durchführbar ist.

13. Wasserfahrzeug, insbesondere unbemanntes Unterwasserfahrzeug, welches einen Rechner nach Anspruch 12 aufweist.

14. Wasserfahrzeug nach Anspruch 13, welches derart eingerichtet ist, dass ein Sonarbild ermittelbar ist.

## Claims

1. Method for detecting an underwater structure from a sonar image with sonar image pixels, wherein the method comprises the following steps:
a) assigning the individual sonar image pixels to a background image or an evaluation image, wherein the evaluation image has assigned evaluation pixels,
b) selecting individual evaluation pixels such that node points (1a, 1b) are present,
c) fitting a mathematical fit function to the node points (1a, 1b), wherein the fit function has a fit function length on account of the node points (1a, 1b),
d) establishing a fit function band with a fit function bandwidth (21), wherein a width value of the fit function bandwidth is shorter than a length value of the fit function length,
e) establishing a number of evaluation pixels which lie within the fit function band and
f) performing an evaluation on the basis of the established number of evaluation pixels.

2. Method according to Claim 1, **characterized in that** steps b) to e) are performed for further evaluation pixels, wherein, in particular, the fit function bandwidth (21) is identical for all fit function bands such that, after establishing the respective number of evaluation pixels, the number of evaluation pixels for different fit functions is present in each case.

3. Method according to Claim 2, **characterized in that**, during the evaluation, the fit function for the fit function band with the greatest number of evaluation pixels describes a position of the underwater structure.

4. Method according to Claim 2, **characterized in that** a functional curve of the fit functions with the fit function bands with the greatest number of evaluation pixels, or with an equal number of evaluation pixels, is averaged.

5. Method according to any one of the preceding claims, **characterized in that** the assignment is performed on account of a threshold overshoot of a sonar image pixel or a gradient function of at least two sonar image pixels.

6. Method according to any one of the preceding claims, **characterized in that** the selection of the evaluation pixels is effected in such a way that a minimum distance value between two evaluation pixels lies above the width value of the fit function bandwidth.

7. Method according to any one of the preceding claims, **characterized in that** the selection of the evaluation pixels is effected randomly.

8. Method according to any one of the preceding claims, **characterized in that** a functional curve of the fit function is fitted to an assumed profile of the underwater structure or a fit function bandwidth is fitted to the underwater structure.

9. Method according to any one of the preceding claims, **characterized in that** the fit function is separated.

10. Method according to any one of the preceding claims, **characterized in that** there is a regression when fitting the fit function or so many evaluation pixels are selected that a minimum number of evaluation pixels is present in order to be exactly describable by the fit function.

11. Method according to any one of the preceding claims, **characterized in that** a sonar image is established at the beginning of the method.

12. Computer which is configured in such a way that a method according to any one of Claims 1 to 10 is performable.

13. Watercraft, in particular an unmanned underwater vehicle, which comprises a computer according to Claim 12.

14. Watercraft according to Claim 13, which is configured in such a way that a sonar image is establishable.

## Revendications

1. Procédé de détection d'une structure immergée à partir d'une image sonar comportant des pixels d'image sonar, dans lequel le procédé comprend les étapes consistant à :
a) associer les pixels d'image sonar individuels à une image d'arrière-plan ou à une image d'évaluation, dans lequel l'image d'évaluation contient des pixels d'évaluation associés,
b) sélectionner des pixels d'évaluation individuels de manière à obtenir des points d'interpolation (1a, 1b),
c) adapter une fonction d'ajustement mathématique aux points d'interpolation (1a, 1b), dans lequel la longueur de la fonction d'ajustement dépend des points d'interpolation (1a, 1b),
d) déterminer une bande de fonction d'ajustement ayant une largeur de bande de fonction d'ajustement (21), dans lequel une valeur de largeur de la largeur de bande de fonction d'enregistrement est inférieure à une valeur de longueur de la longueur de fonction d'ajustement,
e) déterminer un nombre de pixels d'évaluation qui se situent à l'intérieur de la bande de fonction d'ajustement, et
f) effectuer une évaluation sur la base du nombre déterminé de pixels d'évaluation.

2. Procédé selon la revendication 1, **caractérisé en ce que** les étapes b) à e) sont effectuées pour d'autres pixels d'évaluation, dans lequel la largeur de bande de fonction d'ajustement (21) est en particulier identique pour toutes les bandes de fonction d'ajustement, de telle sorte que le nombre des pixels d'évaluation est obtenu après la détermination du nombre respectif de pixels d'évaluation pour des fonctions d'ajustement différentes.

3. Procédé selon la revendication 2, **caractérisé en ce que**, lors de l'évaluation, la fonction d'ajustement à la bande de fonction qui présente le plus grand nombre de pixels d'évaluation décrit une position de la structure immergée.

4. Procédé selon la revendication 2, **caractérisé en ce qu'**une courbe fonctionnelle des fonctions d'ajustement présentant les bandes de fonction d'ajustement ayant les nombres de pixels d'évaluation les plus grands ou des nombres identiques de pixels d'évaluation est moyennée.

5. Procédé selon l'une des revendications précédentes, **caractérisé en ce que** l'association est effectuée sur la base d'un dépassement d'une valeur de seuil d'un pixel d'image sonar ou d'une fonction de gradient d'au moins deux pixels d'image sonar.

6. Procédé selon l'une des revendications précédentes, **caractérisé en ce que** la sélection des pixels d'évaluation est effectuée de manière à ce qu'une valeur d'écart minimale entre deux pixels d'évaluation se situe au-dessus de la valeur de largeur de la largeur de la bande de fonction d'ajustement.

7. Procédé selon l'une des revendications précédentes, **caractérisé en ce que** la sélection des pixels d'évaluation est effectuée de manière aléatoire.

8. Procédé selon l'une des revendications précédentes, **caractérisé en ce qu'**une courbe fonctionnelle de la fonction d'ajustement est adaptée à une courbe présumée de la structure sous-jacente ou à une largeur de bande de fonction d'ajustement de la structure immergée.

9. Procédé selon l'une des revendications précédentes, **caractérisé en ce que** la fonction d'ajustement est séparée.

10. Procédé selon l'une des revendications précédentes, **caractérisé en ce que**, lors de l'adaptation de la fonction d'ajustement, une régression est effectuée ou le nombre de pixels d'évaluation sélectionné est tel qu'un nombre minimal de pixels d'évaluation soit obtenu afin que la fonction d'ajustement puisse être décrite de manière exacte.

11. Procédé selon l'une des revendications précédentes, **caractérisé en ce qu'**une image sonar est déterminée au début du procédé.

12. Calculateur conçu de manière à pouvoir mettre en oeuvre le procédé selon l'une des revendications 1 à 10.

13. Embarcation, en particulier embarcation sous-marine sans équipage comportant un calculateur selon la revendication 12.

14. Embarcation selon la revendication 13, qui est conçue de manière à pouvoir déterminer une image sonar.
